# EUROPEAN PATENT APPLICATION

(11) **EP 4 756 890 A1**
(43) Date of publication of application: **10.06.2026**
(21) Application number: 24848783.7
(22) Date of filing: 02.07.2024
(51) Int. Cl.: H01M 4/13, H01M 4/02, H01M 4/64, H01M 10/04, H01M 10/0587

(54) **ELECTRODE AND SECONDARY BATTERY**

(30) Priority: 31.07.2023 JP 2023124931
(71) Applicant: Panasonic Intellectual Property Management Co., Ltd., Kadoma-shi, Osaka 571-0057 (JP)
(72) Inventor: IMAOKU Takao, Kadoma-shi, Osaka 571-0057 (JP); WAKABAYASHI Hiromichi, Kadoma-shi, Osaka 571-0057 (JP); FUKUI Kosuke, Kadoma-shi, Osaka 571-0057 (JP); ITO Katsuya, Kadoma-shi, Osaka 571-0057 (JP)
(74) Representative: Eisenführ Speiser
(86) International application number: PCT/JP2024/023872
(87) International publication number: WO 2025/028124

(57) **Abstract**

**In a positive electrode, which is an example of an embodiment, a positive electrode mixture layer (31A) has a tail region (33A) in which there are formed a plurality of tail portions (34A) extending in the length direction of a positive electrode core body (30) from one edge of a core body exposed portion (32A), and a positive electrode mixture layer (31B) has a tail region (33B) in which there are formed a plurality of tail portions (34B) extending in the length direction of the positive electrode core body (30) from one edge of a core body exposed portion (32B). The positive electrode mixture layers (31A, 31B) are formed so that at least tail leading end regions (37A, 37B) do not overlap in the thickness direction of the positive electrode core body (30).**

## Description

### TECHNICAL FIELD

The present disclosure relates to an electrode and a secondary battery comprising this electrode.

### BACKGROUND ART

An electrode for a secondary battery typically has a core composed of metal foil and a mixture layer formed on each of both surfaces of the core, and is manufactured by applying a slurry of a mixture including active material particles onto both surfaces of the core, and drying and compressing the coating films. At this time, the mixture slurry may be intermittently applied to provide a core exposed portion where the surface of the core is exposed. The core exposed portion is provided in a portion, for example, where an electrode lead is to be connected, which is a middle portion in a length direction of the electrode.

When the mixture slurry is intermittently applied to provide the core exposed portion, a trail portion is formed on an application end portion of the mixture slurry. The trail portion is a thin line-shaped portion extending long in the direction of application of the mixture slurry, and its tip portion particularly exhibits a state where active material particles are scatteringly present. Thus, the core is strongly compressed at a portion sandwiched by the trail portions when pressure is applied to the electrode, which may cause the active material particles to enter the core, causing the core to become locally thin.

Conventionally known is art in which a protective layer is formed on a portion to be cut for the purpose of inhibiting burrs generated in the step of cutting the electrode due to the trail portion (see Patent Literature 1). Patent Literature 1 describes that providing the protective layer on the portion where the trail portion is formed inhibits generation of burrs in the cutting step.

### CITATION LIST

### PATENT LITERATURE

PATENT LITERATURE 1: International Publication No. WO 2019-077943

### SUMMARY

A plurality of the trail portions are formed so as to extend from one edge of the core exposed portion. As a result of investigation by the present inventors, it has been found that the core is damaged due to the trail portions when the secondary battery is repeatedly charged and discharged. When a crack on the core becomes large and the core breaks, problems such as rise in resistance, decrease in capacity, and the like occur, and thus, it is an important challenge to inhibit the damage of the core due to the trail portions.

An electrode of an aspect of the present disclosure is an electrode comprising: an elongated core including a first end and a second end in a length direction; and first and second mixture layers respectively disposed on both surfaces of the core, wherein first and second core exposed portions are provided in a middle portion in the length direction of the core, the first and second core exposed portions overlapping in a thickness direction of the core, the first mixture layer has a first trail region where a plurality of first trail portions extending from an edge on a side of the first end of the first core exposed portion in the length direction of the core are formed, the second mixture layer has a second trail region where a plurality of second trail portions extending from an edge on a side of the first end of the second core exposed portion in the length direction of the core are formed, and when ranges from a tip of a trail portion positioned closest to a side of the first end to a tip of a trail portion positioned closest to a side of the first end are defined as first and second trail tip regions respectively in the first and second trail regions, the first and second mixture layers are formed so that the first and second trail tip regions do not overlap in the thickness direction of the core.

An electrode of another aspect of the present disclosure is an electrode comprising: an elongated core including a first end and a second end in a length direction; and first and second mixture layers respectively disposed on both surfaces of the core, wherein first and second core exposed portions are provided in a middle portion in the length direction of the core, the first and second core exposed portions overlapping in a thickness direction of the core, the first mixture layer has a first trail region where a plurality of first trail portions extending from an edge on a side of the first end of the first core exposed portion in the length direction of the core are formed, the second mixture layer has a second trail region where a plurality of second trail portions extending from an edge on a side of the first end of the second core exposed portion in the length direction of the core are formed, and the first and second trail regions are formed so that length ranges of greater than or equal to 50% of each of the regions along the length direction of the core do not overlap in the thickness direction of the core.

A secondary battery according to the present disclosure is a secondary battery comprising a wound electrode assembly including a positive electrode, a negative electrode, and a separator, wherein the above electrode is applied for the positive electrode.

The electrode according to the present disclosure may effectively inhibit the damage of the core due to the trail portion.

### BRIEF DESCRIPTION OF DRAWING

FIG. 1 is an axial sectional view of a cylindrical battery of an example of an embodiment.
FIG. 2 is a front view of a positive electrode of an example of an embodiment.
FIG. 3 is a sectional view along the line AA in FIG. 2.
FIG. 4 is an enlarged view of a trail portion of a positive electrode and a proximity thereof; (a) illustrates a first surface (a front view) of the positive electrode, and (b) illustrates a second surface (a back view) of the positive electrode.
FIG. 5 is a sectional view illustrating a conventional example of an electrode.

### DESCRIPTION OF EMBODIMENTS

As noted above, when the mixture slurry is intermittently applied to provide the core exposed portion, the trail portion is formed on the application end portion of the mixture slurry. The mixture slurry is applied with a die coater, for example. It is difficult to stop applying the slurry so that the position of the mixture end along the edge of the core exposed portion becomes a straight line, and the slurry is applied from the die head so that the application end portion trails to form a plurality of the trail portions.

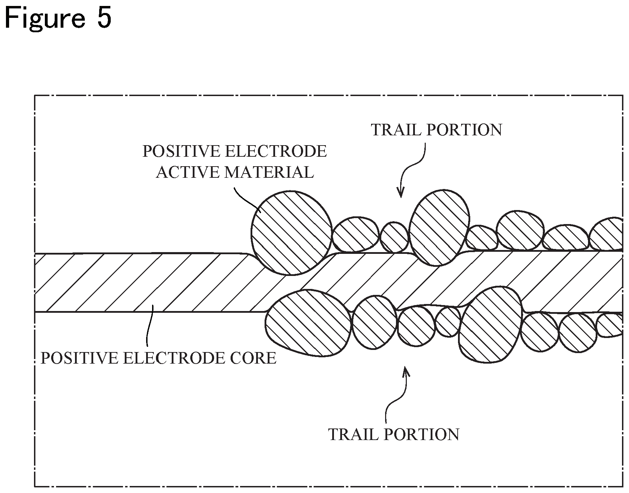

FIG. 5 schematically illustrates a cross section of an electrode plate of a conventional electrode cut in the length direction of the trail portion. As illustrated in FIG. 5, the active material particles exhibit a state of being scatteringly present particularly near the tip of the trail portion. For example, expansion of the negative electrode with charging and discharging of the secondary battery locally applies a large pressure to the core due to the active material particles that are scatteringly present. As a result, the active material particles may enter the core, causing the core to become locally thin.

As a result of investigation by the present inventors, it has been revealed that damage such as a crack is generated at the portion where the trail portion is present in the core when the secondary battery is repeatedly charged and discharged. Then, it has been found that the damage of the core is effectively inhibited by shifting each of the trail portions on the front and back sides of the electrode plate so that each of the trail tip regions does not overlap in the thickness direction of the core or by shifting each of the trail portions on the front and back sides so that length ranges of greater than or equal to 50% of the trail regions do not overlap in the thickness direction of the core.

Hereinafter, an example of embodiments of the electrode and the secondary battery according to the present disclosure will be described in detail with reference to the drawings. The embodiments described below are merely examples, and the present disclosure is not limited to the following embodiments. In addition, the present disclosure includes configurations in which each constituent of the embodiments described below is selectively combined.

Hereinafter, a cylindrical battery 10 in which a wound electrode assembly 14 is housed in a bottomed cylindrical exterior housing can 16 will be exemplified as an example of the embodiment of the secondary battery according to the present disclosure, but the exterior body of the battery is not limited to the cylindrical exterior housing can. The secondary battery according to the present disclosure may be, for example, a rectangular battery comprising a rectangular exterior housing can or a pouch battery comprising an exterior body constituted with laminated sheets including a metal layer and a resin layer.

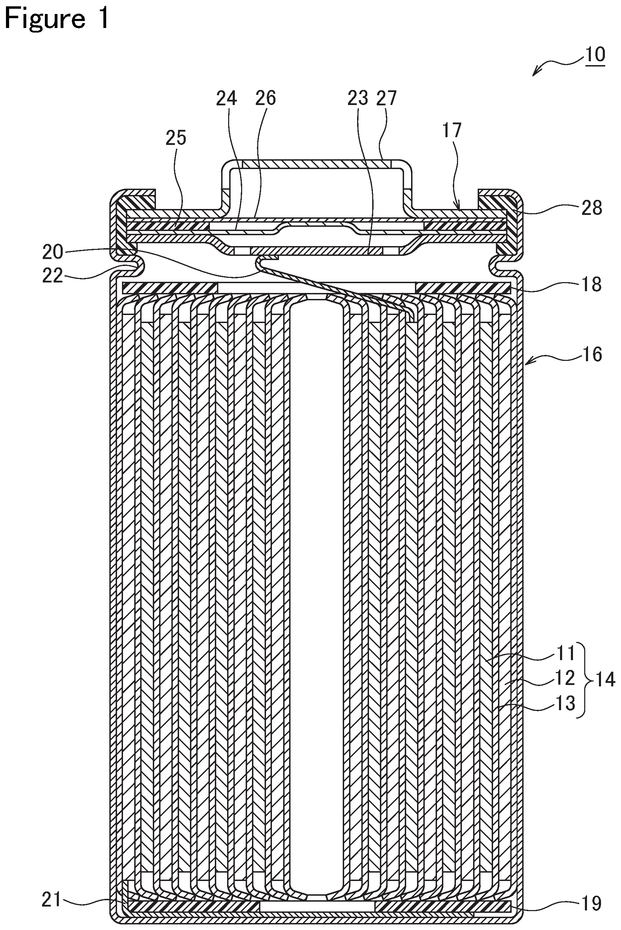

FIG. 1 is a view schematically illustrating an axial cross section of the cylindrical battery 10 of an example of an embodiment. As illustrated in FIG. 1, the cylindrical battery 10 comprises the electrode assembly 14, an electrolyte, and the bottomed cylindrical exterior housing can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container opened on one side in an axial direction, and the opening portion of the exterior housing can 16 is capped with a sealing assembly 17. Hereinafter, for convenience of description, the sealing assembly 17 side of the cylindrical battery 10 will be described as the upper side, and the bottom side of the exterior housing can 16 will be described as the lower side.

The electrolyte may be an aqueous electrolyte, but a non-aqueous electrolyte is used in the present embodiment. The non-aqueous electrolyte has lithium-ion conductivity. The non-aqueous electrolyte may be a liquid electrolyte (an electrolyte liquid) or may be a solid electrolyte. The cylindrical battery 10 is a non-aqueous electrolyte secondary battery, for example, and particularly preferably a lithium-ion battery.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted product in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, or the like can be used, for example. As the inorganic solid electrolyte, a known material for an all-solid lithium-ion secondary battery and the like (for example, an oxide-type solid electrolyte, a sulfide-type solid electrolyte, a halogen-type solid electrolyte, or the like) may be used. The polymer electrolyte includes a lithium salt and a matrix polymer, or includes a non-aqueous solvent, a lithium salt, and a matrix polymer, for example. As the matrix polymer, a polymer material that absorbs the non-aqueous solvent to form a gel is used, for example. The polymer material includes a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a length direction and a width direction (a short direction). The separators 13 are formed to be one size larger than at least the positive electrode 11, and two of them are disposed so as to sandwich the positive electrode 11. The cylindrical battery 10 comprises insulating plates 18 and 19 disposed on the upper and lower sides of the electrode assembly 14, respectively.

The electrode assembly 14 has a positive electrode lead 20 connected to the positive electrode 11 by welding or the like and a negative electrode lead 21 connected to the negative electrode 12 by welding or the like. In the present embodiment, the positive electrode lead 20 is connected to a center portion in the length direction of the positive electrode 11, and the negative electrode lead 21 is connected to an end portion in the length direction of the negative electrode 12 positioned on an outer winding side of the electrode assembly 14. The positive electrode lead 20 is connected to a lower surface of an internal terminal plate 23, which is a bottom plate of the sealing assembly 17, and the negative electrode lead 21 is connected to a can bottom inner surface of the exterior housing can 16. Thus, the sealing assembly 17 becomes a positive electrode external terminal, and the exterior housing can 16 becomes a negative electrode external terminal.

The negative electrode 12 may be disposed on the outer peripheral surface of the electrode assembly 14 and an exposed portion of a negative electrode core may be in contact with the inner peripheral surface of the exterior housing can 16 to electrically connect the negative electrode 12 and the exterior housing can 16. Alternatively, a negative electrode lead may be connected to the center portion in the length direction of the negative electrode 12.

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film having a surface layer composed of such a metal, or the like may be used. A thickness of the positive electrode core is preferably greater than or equal to 5 µm and less than or equal to 25 µm, and more preferably greater than or equal to 10 µm and less than or equal to 20 µm. The positive electrode mixture layer includes a positive electrode active material, a conductive agent, and a binder, and is preferably provided on both surfaces of the positive electrode core. A thickness of the positive electrode mixture layer is larger than the thickness of the positive electrode core, and for example, greater than or equal to 60 µm and less than or equal to 120 µm on one surface of the positive electrode core.

For the positive electrode active material, a lithium-transition metal composite oxide containing a transition metal element such as Ni, Co, and Mn is used. Examples of the metal element contained in the lithium-transition metal composite oxide include Ni, Co, Mn, Al, Be, B, Na, Mg, Si, K, Ca, Sc, Ti, V, Cr, Fe, Cu, Zn, Ga, Sr, Y, Zr, Nb, Mo, In, Sn, Sb, Ba, Ta, W, Pb, and Bi. Among these, at least one of Ni, Co, and Mn is preferably contained. The lithium-transition metal composite oxide may be used singly, or a plurality of types thereof may be used in combination.

The positive electrode active material is of particles having a volume-based median diameter (D50) of, for example, greater than or equal to 10 µm and less than or equal to 30 µm, and preferably greater than or equal to 15 µm and less than or equal to 25 µm. D50 means a particle diameter at which a cumulative frequency is 50% from a smaller particle diameter side in volume-based particle size distribution. The particle size distribution of the lithium-transition metal composite oxide may be measured by using a laser diffraction-type particle size distribution measuring device (for example, MT3000II, manufactured by MicrotracBEL Corp.) with water as a dispersion medium. In addition, the particle size distribution may be measured by using an image-type particle size distribution measuring device (for example, CAMSIZER X2, manufactured by MicrotracBEL Corp.) with water as a dispersion medium.

The thickness of the positive electrode core may be larger than the D50 of the positive electrode active material particles, but is preferably less than or equal to the D50 of the active material particles from the viewpoints of increase in capacity and the like. Note that the particle diameter of the active material larger than the thickness of the core easily generates the damage of the core due to the trail portion. Although details will be described later, the damage of the positive electrode core may be effectively inhibited even in such a case by applying a configuration of shifted trail regions on the front and back sides of the electrode plate for the positive electrode 11.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. Examples of the binder may include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), and the like.

The positive electrode **11** may be produced by applying a positive electrode mixture slurry including the positive electrode active material, the conductive agent, and the binder onto the positive electrode core, and drying and subsequently compressing the coating film to form the positive electrode mixture layer on each of both surfaces of the positive electrode core. The positive electrode 11 in which the core exposed portion where the positive electrode lead 20 is to be connected is provided in the middle portion in the length direction is produced by intermittently applying the positive electrode mixture slurry to temporarily stop applying the slurry. A portion where the slurry is not applied becomes the core exposed portion. For a dispersion medium of the positive electrode mixture slurry, N-methyl-2-pyrrolidone (NMP) is used, for example.

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film having a surface layer composed of such a metal, and the like may be used. The negative electrode mixture layer includes a negative electrode active material and a binder, and is preferably provided on both surfaces of the negative electrode core. The negative electrode 12 may be produced by, as in the case of the positive electrode 11, applying a negative electrode mixture slurry onto the negative electrode core, and drying and subsequently compressing the coating film to form the negative electrode mixture layer on each of both surfaces of the negative electrode core. As the negative electrode 12, metal lithium foil may also be used. Alternatively, the negative electrode 12 may be constituted with only the negative electrode core, and metal lithium may be precipitated on the core surface during charging of the battery.

The negative electrode active material is not particularly limited as long as the material reversibly absorbs and releases lithium ions, and a carbon material such as graphite is typically used. For the negative electrode active material, an element that forms an alloy with Li, such as Si and Sn, a material containing the element, and the like may be used. Among these, a silicon-containing material containing Si is preferable. As the negative electrode active material, lithium titanate or the like, which has a high potential of charging and discharging relative to metal lithium compared with the carbon material and the like may also be used. The negative electrode active material may be used singly, or a plurality of types thereof may be used in combination.

For the binder included in the negative electrode mixture layer, a fluororesin, an olefin resin, PAN, a polyimide, a polyamide, an acrylic resin, or the like may be used as in the case of the positive electrode 11, but polyvinyl acetate, styrene-butadiene rubber (SBR), or the like may be used. Among these, SBR is preferably used. The binder may be used singly, or a plurality of types thereof may be used in combination. The negative electrode mixture layer preferably includes CMC or a salt thereof, polyacrylic acid (PAA) or a salt thereof, polyvinyl alcohol (PVA), or the like. Note that the negative electrode mixture layer may include a conductive agent such as CNT.

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed. On an interface between the separator 13 and at least one of the positive electrode 11 and the negative electrode 12, a filler layer including an inorganic filler may be formed.

As noted above, the exterior housing can 16 is a bottomed cylindrical metallic container opened on one side in the axial direction. A gasket 28 is provided between the exterior housing can 16 and the sealing assembly 17 to achieve sealability inside the battery and insulation between the exterior housing can 16 and the sealing assembly 17. On the exterior housing can 16, a grooved portion 22 in which a part of a side surface portion thereof projects inward is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 crimping the sealing assembly 17.

The sealing assembly 17 has a stacked structure of the internal terminal plate 23, a lower vent member 24, an insulating member 25, an upper vent member 26, and a cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormality of the battery, the lower vent member 24 is deformed so as to push the upper vent member 26 up toward the cap 27 side and breaks, and thereby cutting off a current pathway between the lower vent member 24 and the upper vent member 26. If the internal pressure further increases, the upper vent member 26 breaks, and gas is discharged through an opening portion of the cap 27.

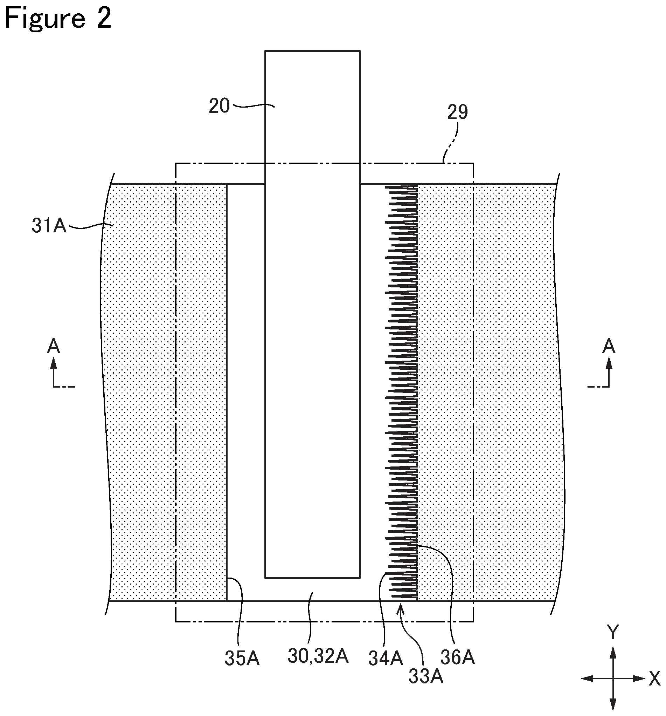

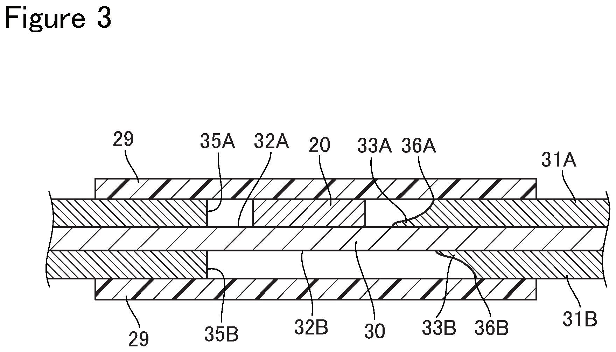

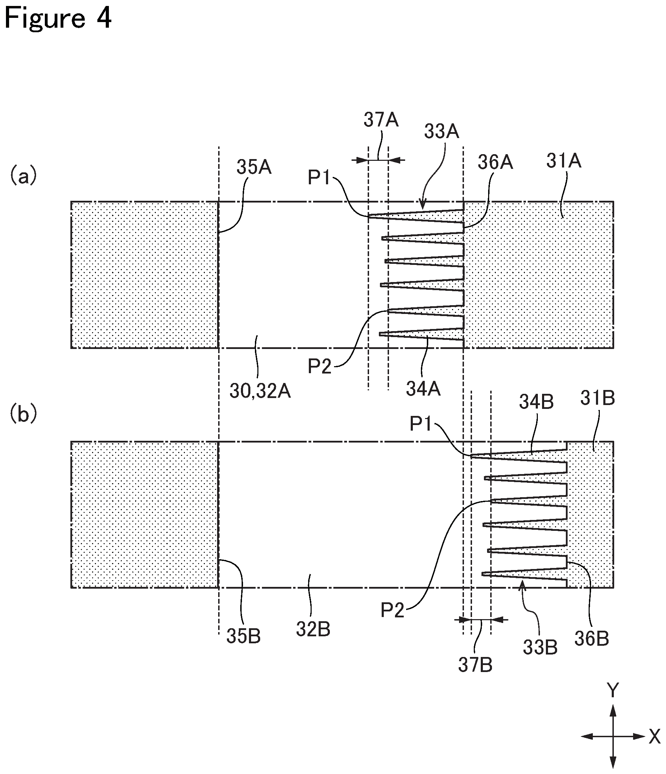

Hereinafter, the configuration of the positive electrode 11 will be described in further detail with reference to FIG. 2 to FIG. 4. FIG. 2 is a front view of the positive electrode 11, and illustrates a core exposed portion 32A and a proximity thereof. In FIG. 2, a protective tape 29 is illustrated as an imaginary line. FIG. 3 is a sectional view along the line AA in FIG. 2, FIG. 4(a) is an enlarged view of a trail region 33A and a proximity thereof, and FIG. 4(b) is an enlarged view of a trail region 33B and a proximity thereof.

As illustrated in FIG. 2 to FIG. 4, the positive electrode 11 comprises an elongated positive electrode core 30, a first positive electrode mixture layer 31A disposed on a first surface of the positive electrode core 30, and a second positive electrode mixture layer 31B disposed on a second surface of the positive electrode core 30, and has a structure in which the core exposed portions 32A and 32B are provided in a middle portion in the length direction of the positive electrode core 30. Although the first surface of the positive electrode core 30 may be directed to any of the outer winding side and the inner winding side of the electrode assembly 14, in the present embodiment, the first surface is the outer winding surface (the front surface) directed to the outer winding side of the electrode assembly 14, and the second surface is the inner winding surface (the rear surface) directed to the inner winding side. The positive electrode lead 20 is bonded to the core exposed portion 32A on the first surface. For example, the positive electrode lead 20 is disposed so as not to overlap with the positive electrode mixture layer 31A, and is ultrasonically welded with the positive electrode core 30.

The positive electrode core 30 is preferably constituted with elongated metal foil including a first end and a second end in the length direction. In FIG. 2 and FIG. 4, the length direction of the positive electrode core 30 is shown as X, the width direction thereof is shown as Y, and one side in the X direction is the first end side in the length direction of the positive electrode core 30. The first end of the positive electrode core 30 is disposed on, for example, an initial winding side of the positive electrode 11. The core exposed portions 32A and 32B may be formed in positions at substantially equal distances from the first end and the second end of the positive electrode core 30. The core exposed portions 32A and 32B are disposed so as to overlap in the thickness direction of the positive electrode core 30.

In the present embodiment, one core exposed portion is formed on each of the front and back sides of the positive electrode 11, but a plurality of the core exposed portions may be formed with a space in the length direction (the X direction) of the positive electrode 11. When a plurality of the core exposed portions are formed in the length direction of the positive electrode 11, configurations of the trail regions 33A and 33B, described later, are preferably applied for all the core exposed portions.

The core exposed portion 32A has a size such that the positive electrode lead 20 may be disposed so as not to overlap with the positive electrode mixture layer 31A. The core exposed portion 32A is longer in the Y direction than in the X direction, and formed over the entire width of the positive electrode core 30. The core exposed portion may be formed with a length so as not to reach from one end to the other end in the width direction of the positive electrode core 30. The width (the length in the X direction) of the core exposed portion 32A is preferably greater than or equal to 1.1 times and less than or equal to 2.0 times, and more preferably greater than or equal to 1.2 times and less than or equal to 1.5 times the width of the positive electrode lead 20. The width of the core exposed portion 32A means a length along the X direction from an application start portion 35A to an application end portion 36A (see FIG. 4). A plurality of trail portions 34A are formed on the application end portion 36A, and a position corresponding to the application end portion 36A is defined as an edge on an initial winding side of the core exposed portion 32A (the first end side of the positive electrode core 30). Similarly, the width of the core exposed portion 32B means a length along the X direction from an application start portion 35B to an application end portion 36B, and a position corresponding to the application end portion 36B is defined as an edge on an initial winding side of the core exposed portion 32B. Although details will be described later, the core exposed portion 32B is formed to be wider than the core exposed portion 32A.

On the front and back sides of the positive electrode 11, a protective tape 29 covering the positive electrode lead 20 and each of the core exposed portions 32A and 32B is adhered. The protective tape 29 is an insulating tape including a tape substrate and an adhesive layer formed on one surface of the substrate, for example. Examples of a resin constituting the tape substrate include polyester, polypropylene, polyimide, polyphenylene sulfide, polyether imide, and polyamide. A thickness of the tape substrate is, for example, greater than or equal to 10 µm and less than or equal to 30 µm. A width of the protective tape 29 is larger than the widths of the core exposed portions 32A and 32B, and the protective tape 29 covers the entirety of the core exposed portions 32A and 32B. The protective tape 29 is preferably adhered to the front and back sides of the positive electrode 11 so as to cover the entirety of the trail regions 33A and 33B.

On the front and back sides of the positive electrode 11, the trail regions 33A and 33B including a plurality of trail portions 34A and 34B are respectively formed. In the present embodiment, the X direction is a direction of application of the positive electrode mixture slurry, and the trail portions 34A and 34B both extend in the X direction. The trail portion 34A is a portion where the positive electrode mixture layer 31A is formed in a thin line shape, and the thickness steeply decreases toward the tip of the trail portion 34A. The positive electrode mixture layer 31A is constituted in a region except for the trail portion 34A such that a plurality of the positive electrode active material particles are stacked in a thickness direction of the layer, but the tip portion of the trail portion 34A has a monolayer structure in which the active material particles are scatteringly present (see FIG. 5).

The first trail portions 34A have equivalent lengths and widths to each other, but each of the sizes is uneven. For example, the length of the trail portion 34 is greater than or equal to 1 mm and less than or equal to 5 mm, and the width of the trail portion 34A is less than or equal to 30% of the length thereof. The trail portion 34A has a tapered shape in which the thickness decreases from the root toward the tip, and the width gradually decreases. Note that the second trail portion 34 B has the equivalent shape and size to the first trail portion 34A.

The first trail region 33A is formed along the edge on the initial winding side of the first core exposed portion 32A (the edge on the first end side of the positive electrode core 30). The second trail region 33B is similarly formed along the edge on the initial winding side of the second core exposed portion 32B. Since the trail regions 33A and 33B are formed on the application end portion of the positive electrode mixture slurry, the positive electrode mixture slurry is applied from the first end side of the positive electrode core 30 in the present embodiment. Since the positive electrode mixture layers 31A and 31 B are formed over the entire width of the positive electrode core 30, the trail regions 33A and 33B are also formed over the entire width of the positive electrode core 30.

The trail regions 33A and 33B formed on the edge on the initial winding side of the core exposed portions 32A and 32B are disposed such that at least the tip portions do not overlap in the thickness direction of the positive electrode core 30. Meanwhile, the edges on the terminal winding side of the core exposed portions 32A and 32B (the edges on the second end side of the positive electrode core 30) overlap in the thickness direction of the positive electrode core 30. The application start portions 35A and 35B on positions corresponding to the edges on the terminal winding side of the core exposed portions 32A and 32B extend as straight lines in a front view, and overlap with each other in the thickness direction of the positive electrode core 30. On the application start portion of the positive electrode mixture slurry, the trail portion is not formed.

The application start portions 35A and 35B may substantially overlap. The positions of the application start portions 35A and 35B may be shifted within a range regarded as substantially overlapping (for example, about 1 mm in the X direction). The position of the application start portion 35B may be moved nearer to the position of the application start portion 35A on the initial winding side, but in such a case, it becomes difficult to achieve positioning of the core exposed portions 32A and 32B, which consequently requires increase in the widths of the core exposed portions 32A and 32B. Making the positions of the application start portions 35A and 35B coincide with each other on the front and back sides of the positive electrode 11 may form the core exposed portions 32A and 32B with the minimum required width, and contributes to increase in the capacity of the battery.

In the present embodiment, a range from a tip P1 positioned closest to the second end side of the positive electrode core 30 among a plurality of tips of the trail portion 34A to a tip P2 positioned closest to the first end side of the positive electrode core 30 is defined as a first trail tip region 37A. A range from a tip P1 positioned closest to the second end side of the positive electrode core 30 among a plurality of tips of the trail portion 34B to a tip P2 positioned closest to the first end side of the positive electrode core 30 is defined as a second trail tip region 37B. The positive electrode mixture layers 31A and 31B are formed such that each of the trail tip regions 37A and 37B does not overlap in the thickness direction of the positive electrode core 30.

The trail tip region 37A refers to the length range from the tip P1 of the trail portion 34A to the tip P2 of the trail portion 34A along the X direction and to a region having a constant width along the Y direction (the same applies to the trail tip region 37B). The lengths of the trail tip regions 37A and 37B in the X direction may be different from each other, but are substantially the same, for example. The length of the tip region 37A in the X direction is less than 50% of an average length of the trail portion 34A, and greater than or equal to 3% and less than or equal to 30%, for example.

As noted above, the thicknesses and the widths of the trail portions 34A and 34B decrease from the application end portions 36A and 36B being roots toward the tips, and the active material particles tend to have a scattering state particularly in the trail tip regions 37A and 37B. As a result of investigation by the present inventors, it has been found that, when the negative electrode 12 expands with repeated charge-discharge cycles, a case where the tip portions of the trail portions are present overlappingly on the front and back sides of the core causes local compressing and thinning of the core, but in contrast, a case where the trail portion is present only on one side of the core does not cause the thinning of the core leading to damage such as a crack (foil breaking).

The trail regions 33A and 33B may be disposed such that a length region of greater than or equal to 50% of the regions along the X direction does not overlap with each other in the thickness direction of the positive electrode core 30. The positive electrode mixture layers 31A and 31B are formed such that a length region of the trail region 33A corresponding to greater than or equal to 50% of the longest length of the trail portion 34A does not overlap with the trail region 33B; or such that a length region of the trail region 33B corresponding to greater than or equal to 50% of the longest length of the trail portion 34B does not overlap with the trail region 33A.

Furthermore, the trail regions 33A and 33B may be disposed such that the entirety of the regions does not overlap with each other in the thickness direction of the positive electrode core 30. In the present embodiment, the trail regions 33A and 33B are disposed to be completely shifted on the front and back sides of the positive electrode 11, and the width of the core exposed portion 32B is larger than the width of the core exposed portion 32A by the width of the trail region 33A.

As noted above, the positive electrode 11 having the core exposed portions 32A and 32B in the middle portion in the length direction of the electrode plate is produced by intermittently applying the positive electrode mixture slurry to temporarily stop applying the slurry. In this case, portions where the positive electrode mixture slurry is not applied become the core exposed portions 32A and 32B, and the trail regions 33A and 33B are formed in the application end portions 36A and 36B where applying the slurry is stopped. In the present embodiment, the coating film of the first positive electrode mixture layer 31A is formed prior to the coating film of the second positive electrode mixture layer 31B from the viewpoints of stability of the coating film thickness, improvement in productivity, and the like. The coating film of the positive electrode mixture layer 31B is formed with shifted positions of the application end portion such that the trail tip regions 37A and 37B do not overlap with each other on the front and back sides of the positive electrode 11, and such that the length ranges of greater than 50% of the lengths of the trail regions 33A and 33B in the X direction do not overlap with each other.

### EXAMPLES

Hereinafter, the present disclosure will be further described with Examples, but the present disclosure is not limited to these Examples.

### <Example 1>

### [Production of Positive Electrode]

As a positive electrode active material, a lithium-nickel composite oxide having a D50 of 10 µm was used. The positive electrode active material, acetylene black, and polyvinylidene fluoride were mixed at a solid-content mass ratio of 97:2:1, and N-methyl-2-pyrrolidone (NMP) was used as a dispersion medium to prepare a positive electrode mixture slurry. This slurry was applied on both surfaces of a positive electrode core composed of aluminum foil having a thickness of 15 µm with a die coater, the coating film was dried, and then the coating film was compressed with a roller. Thereafter, the positive electrode core was cut to a predetermined electrode size to obtain a positive electrode in which a positive electrode mixture layer was formed on each of both surfaces of the positive electrode core. A core exposed portion, which was a connecting portion for the positive electrode lead, was formed in the middle portion in the length direction of the positive electrode.

On a first surface (the front surface) of the positive electrode core, the positive electrode mixture slurry was applied while controlling the die coater so that the first core exposed portion had about 10 mm in width (the length in the X direction). In this case, the first trail region formed on the application end portion of the slurry had about 3 mm in width (the length in the X direction). A portion between the tip of the first trail region (the tip of the longest trail portion) and the application start portion where applying the slurry was restarted was the first core exposed portion. The amount of the slurry applied was controllable by modifying a space between the positive electrode core and the die head, and the space was set so that the thickness of the positive electrode mixture layer was 50 µm.

The first coating film formed on the first surface of the positive electrode core was dried, and then the positive electrode mixture slurry was intermittently applied on a second surface (the rear surface) to form a second coating film to form a second core exposed portion wider than the first core exposed portion. The position of the application start portion of the second coating film was made to coincide with the application start portion of the first coating film. Meanwhile, the position of the application end portion was shifted so that the second trail region formed in the application end portion of the slurry did not overlap with greater than 50% of the length of the first trail region. Specifically, the die coater was controlled to apply the positive electrode mixture slurry so that the second core exposed portion had a width of about 11.5 mm. At this time, the second trail region formed in the application end portion of the slurry had a width of about 3 mm (the length in the X direction).

In the positive electrode of Example 1, the length of the first trail tip region in the X direction was shorter than the length corresponding to 50% of the length of the trail portion positioned closest to the second end side of the positive electrode core (the same applied to the length of the second trail tip region in the X direction), and the first and second trail tip regions did not overlap in the thickness direction of the core. A positive electrode lead made of aluminum was ultrasonically welded with the first core exposed portion, and a protective tape was adhered to the front and back sides of the positive electrode so as to cover the positive electrode lead and the entirety of each of the core exposed portions.

### [Production of Negative Electrode]

As a negative electrode active material, graphite was used. The negative electrode active material, a dispersion of styrene-butadiene rubber, and sodium carboxymethylcellulose were mixed at a solid-content mass ratio of 98:1:1, and water as a dispersion medium was used to prepare a negative electrode mixture slurry. This slurry was applied on both surfaces of a negative electrode core composed of elongated copper foil having a thickness of 8 µm with a die coater, the coating film was dried, and then the coating film was compressed with a roller. Thereafter, the negative electrode core was cut to a predetermined electrode size to obtain a negative electrode in which a negative electrode mixture layer was formed on each of both surfaces of the negative electrode core.

Note that a core exposed portion was left in the end portion in the length direction of the negative electrode core, and the negative electrode mixture layer was formed on the entire region of the negative electrode core except for the exposed portion. A negative electrode lead made of nickel was ultrasonically welded with the core exposed portion, and a protective tape was adhered so as to cover the negative electrode lead.

### [Production of Electrode Assembly]

The positive electrode, the negative electrode, and a separator made of polyethylene were spirally wound by using a cylindrical winding core member, and a winding-stop tape was attached to the outermost peripheral surface to obtain a wound electrode assembly. At this time, the negative electrode was disposed such that the negative electrode lead was positioned on the outer winding side of the electrode assembly. After the winding structure of the electrode assembly was formed, the winding core member was removed to obtain the wound electrode assembly in which a cavity was formed at the winding core portion.

### [Preparation of Non-Aqueous Electrolyte Liquid]

Into 100 parts by mass of a mixed solvent in which ethylene carbonate (EC) and dimethyl carbonate (DMC) were mixed at a volume ratio (25°C) of 1:3, 5 parts by mass of vinylene carbonate (VC) was added, and LiPF₆ was dissolved at 1.5 mol/L to prepare a non-aqueous electrolyte liquid.

### [Production of Cylindrical Battery]

Insulating plates were disposed on the upper and lower sides of the electrode assembly, then the negative electrode lead was welded to an inner surface of a can bottom of a bottomed cylindrical exterior housing can, the positive electrode lead was welded to an internal terminal plate of a sealing assembly, and the electrode assembly was housed in the exterior housing can. Thereafter, the non-aqueous electrolyte liquid was injected into the exterior housing can by a pressure-reducing method, and an opening portion of the exterior housing can was sealed with a sealing assembly via a gasket to obtain a cylindrical battery.

### <Example 2>

A positive electrode and a cylindrical battery were produced in the same manner as in Example 1 except that: the width of the second core exposed portion was about 15 mm; and the positive electrode mixture slurry was intermittently applied on the second surface of the positive electrode core such that the entirety of the second trail region did not overlap with the first trail region.

### <Comparative Example 1>

A positive electrode and a cylindrical battery were produced in the same manner as in Example 1 except that the positions of the application end portion of the slurry were made to coincide on the front and back sides so that the second trail region overlapped with the first trail region.

### [Cycle Test]

Under a temperature environment at 25°C, each of the batteries of Examples and Comparative Example was charged at a constant current of 1 C until a battery voltage reached 4.4 V, and then discharged at a constant current of 1 C until the battery voltage reached 2.5 V. These charge and discharge were performed with 250 cycles. Thereafter, the battery was disassembled to take out the positive electrode, and presence or absence of a crack (foil breaking) in the core exposed portion was visually observed. Table 1 shows the evaluation results. In the evaluation results, a denominator means the number of the batteries subjected to the evaluation, and a numerator means the number of batteries in which foil breaking is observed.

**[Table 1]**

| | Overlap of trail regions on front and back sides | Overlap of trail tip regions on front and back sides | Foil breaking |
|---|---|---|---|
| Example 1 | about 50% | Absence | 0/2 |
| Example 2 | 0% | Absence | 0/2 |
| Comparative Example 1 | about 100% | Presence | 2/2 |

As shown in Table 1, in the battery of Comparative Example, foil breaking was observed (2/2) in the core exposed portion in both of two batteries subjected to the cycle test, but foil breaking was not observed (0/4) in the batteries of Examples. That is, damage of the core due to the trail portion was specifically inhibited by forming the positive electrode mixture layer such that the trail portions did not overlap with greater than or equal to 50% of the length thereof on the front and back sides of the positive electrode. Since the tip portion of the trail portion had a state where the active material particles were scatteringly present, expansion of the negative electrode with the charge-discharge cycle locally compressed and thinned the positive electrode core in the portion sandwiched by the active material particles. Thus, it is considered that foil breaking is sufficiently inhibited by setting the trail tip regions so as not to overlap with each other on the front and back sides of the positive electrode.

The above embodiments have exemplified the case where the configuration of the shifted trail portions on the front and back sides of the electrode plate in the X direction is applied for the positive electrode, and this configuration may be applied also to the negative electrode.

The present disclosure will be further described with the following embodiments.

Constitution 1: An electrode, comprising: an elongated core including a first end and a second end in a length direction; and first and second mixture layers respectively disposed on both surfaces of the core, wherein first and second core exposed portions are provided in a middle portion in the length direction of the core, the first and second core exposed portions overlapping in a thickness direction of the core, the first mixture layer has a first trail region where a plurality of first trail portions extending from an edge on a side of the first end of the first core exposed portion in the length direction of the core are formed, the second mixture layer has a second trail region where a plurality of second trail portions extending from an edge on a side of the first end of the second core exposed portion in the length direction of the core are formed, and when ranges from a tip of a trail portion positioned closest to a side of the second end to a tip of a trail portion positioned closest to a side of the first end are defined as first and second tip regions respectively in the first and second trail regions, the first and second mixture layers are formed so that the first and second tip regions do not overlap in the thickness direction of the core.

Constitution 2: An electrode, comprising: an elongated core including a first end and a second end in a length direction; and first and second mixture layers respectively disposed on both surfaces of the core, wherein first and second core exposed portions are provided in a middle portion in the length direction of the core, the first and second core exposed portions overlapping in a thickness direction of the core, the first mixture layer has a first trail region where a plurality of first trail portions extending from an edge on a side of the first end of the first core exposed portion in the length direction of the core are formed, the second mixture layer has a second trail region where a plurality of second trail portions extending from an edge on a side of the first end of the second core exposed portion in the length direction of the core are formed, and the first and second trail regions are formed so that length ranges of greater than or equal to 50% of each of the regions along the length direction of the core do not overlap in the thickness direction of the core.

Constitution 3: The electrode according to Constitution 1 or 2, wherein edges on sides of the second end of the first and second core exposed portions overlap in the thickness direction of the core.

Constitution 4: The electrode according to any one of Constitutions 1 to 3, wherein the first and second trail regions are disposed so that an entirety of each of the regions does not overlap in the thickness direction of the core.

Constitution 5: The electrode according to any one of Constitutions 1 to 4, wherein a thickness of the core is less than or equal to a volume-based median diameter (D50) of active material particles included in the first and second mixture layers.

Constitution 6: A secondary battery, comprising a wound electrode assembly including a positive electrode, a negative electrode, and a separator, wherein the electrode according to any one of Constitutions 1 to 5 is applied for the positive electrode.

### REFERENCE SIGNS LIST

10 Cylindrical battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 29 Protective tape, 30 Positive electrode core, 31A, 31B Positive electrode mixture layer, 32A, 32B Core exposed portion, 33A, 33B Trail region, 34A, 34B Trail portion, 35A, 35B Application start portion, 36A, 36B Application end portion, 37A, 37B Trail tip region, P1, P2 Tip

## Claims

1. An electrode, comprising:
an elongated core including a first end and a second end in a length direction; and
first and second mixture layers respectively disposed on both surfaces of the core, wherein
first and second core exposed portions are provided in a middle portion in the length direction of the core, the first and second core exposed portions overlapping in a thickness direction of the core,
the first mixture layer has a first trail region where a plurality of first trail portions extending from an edge on a side of the first end of the first core exposed portion in the length direction of the core are formed,
the second mixture layer has a second trail region where a plurality of second trail portions extending from an edge on a side of the first end of the second core exposed portion in the length direction of the core are formed, and
when ranges from a tip of a trail portion positioned closest to a side of the second end to a tip of a trail portion positioned closest to a side of the first end are defined as first and second trail tip regions respectively in the first and second trail regions, the first and second mixture layers are formed so that the first and second trail tip regions do not overlap in the thickness direction of the core.

2. An electrode, comprising:
an elongated core including a first end and a second end in a length direction; and
first and second mixture layers respectively disposed on both surfaces of the core, wherein
first and second core exposed portions are provided in a middle portion in the length direction of the core, the first and second core exposed portions overlapping in a thickness direction of the core,
the first mixture layer has a first trail region where a plurality of first trail portions extending from an edge on a side of the first end of the first core exposed portion in the length direction of the core are formed,
the second mixture layer has a second trail region where a plurality of second trail portions extending from an edge on a side of the first end of the second core exposed portion in the length direction of the core are formed, and
the first and second trail regions are formed so that length ranges of greater than or equal to 50% of each of the regions along the length direction of the core do not overlap in the thickness direction of the core.

3. The electrode according to claim 1 or 2, wherein edges on sides of the second end of the first and second core exposed portions overlap in the thickness direction of the core.

4. The electrode according to claim 1 or 2, wherein the first and second trail regions are disposed so that an entirety of each of the regions does not overlap in the thickness direction of the core.

5. The electrode according to claim 1 or 2, wherein a thickness of the core is less than or equal to a volume-based median diameter (D50) of active material particles included in the first and second mixture layers.

6. A secondary battery, comprising a wound electrode assembly including a positive electrode, a negative electrode, and a separator, wherein the electrode according to claim 1 or 2 is applied for the positive electrode.
